# EUROPÄISCHE PATENTANMELDUNG

(11) **EP 1 752 851 A1**
(43) Veröffentlichungstag der Anmeldung: **14.02.2007**
(21) Anmeldenummer: 05405477.0
(22) Anmeldetag: 12.08.2005
(51) Int. Cl.: G05D 3/14, G01B 5/00, F16C 29/00

(54) **Linearführungssystem mit einer Einrichtung zum Messen**

(71) Anmelder: Schneeberger Holding AG, 4914 Roggwil (CH)
(72) Erfinder: Götz, Klaus-Dieter, 74372 Sersheim (DE); Zillner, Karl Dr., 75217 Birkenfeld (DE); Dann, Thomas, 76307 Karlsbad (DE)
(74) Vertreter: EGLI-EUROPEAN PATENT ATTORNEYS

(57) **Zusammenfassung**

Um bei einem Linearführungssystem mit einem Messkopf zum Messen des von einem Führungswagen (2) gegenüber einer Führungsschiene (1) zurückgelegten Weges, zu ermöglichen, dass das Messsystem (3) die absolute Position nach einer Erstmontage erkennen kann, sowie wenn der Sensorteil ausgebaut war und wieder montiert wurde, wird vorgeschlagen, dass der Messsensor bei einer Bewegung des Führungswagens (2) auf der Führungsschiene (1) sowohl die Informationen des Massstabes (10) wie auch die Informationen der Referenzmarken erfassen kann. Der Messsensor (3) ist so am Führungswagen (2) montiert ist, dass er beim Montieren eine ausreichende Zahl von Referenzmarken (16) überstreicht, um die absolute Position des Messsensors (3) und damit des Führungswagens (2) nach der Montage ermitteln zu können.

## Beschreibung

Die Erfindung betrifft ein Linearführungssystem mit einer Einrichtung zum Messen des von einem Führungswagen gegenüber einer gradlinigen Führungsschiene zurückgelegten Weges. Insbesondere betrifft die Erfindung ein solches System, bei der die Führungsschiene einen Massstab und der Führungswagen einen Messkopf mit zumindest einem Sensor aufweist, der für eine vorzugsweise berührungslose Abtastung des Massstabes ausgebildet ist.

Ein typisches Linearführungssystem mit einer Messeinrichtung ist aus der WO-A-91/16594 bekannt. Dort wurde vorgeschlagen, eine Massverkörperung unmittelbar auf eine Führungsfläche oder auf bzw. in das Material eines länglichen Trägers und dieser auf die Führungsfläche aufzubringen. Eine ähnliche Ausbildung eines Linearbewegungssystems mit einem Messsystem ist aus der DE 295 22 402 U bekannt. Insbesondere wird eine beispielhafte Lesekopfanbindung als Vorbild für die im nachfolgenden beschriebene Erfindung schon in der DE 295 22 402 U offenbart.

Ein typisches Messsystem wurde aus der DE-295 21 912 U1 grundsätzlich bekannt. Dort wird weiterhin vorgeschlagen, ein magnetisches Messsystem zu verwenden, welches der vorliegenden Erfindung grundsätzlich - allerdings lediglich beispielhaft - als Vorlage dienen kann.

Aufgabe der vorliegenden Erfindung ist die Schaffung eines gattungsgemässen Linearführungssystems, bei dem die Nachteile des Standes der Technik überwunden werden können. Insbesondere soll das Messsystem die absolute Position nach einer Erstmontage erkennen können, sowie wenn der Sensorteil ausgebaut war und wieder montiert wurde.

Diese Aufgabe wird mittels einem Linearführungssystem nach Anspruch 1 gelöst. Dabei haben die Massnahmen der Erfindung zunächst einmal zur Folge, dass durch den Einbau des Messsensors zwangsweise mehrere Referenzmarken überstrichen werden, so dass die Feststellung der absoluten Position quasi beim Einbau erzwungen wird. Nach dem Einbau des Messsensors und der Fixierung am vorgesehenen Ort ist damit dann auch die Position des Führungswagens auf der Führungsschiene bestimmt.

Besonders vorteilhaft ist noch überraschenderweise eine bestimmte Ausgestaltung der Erfindung, bei der der Messsensor beim Einschieben in das fest mit dem Führungswagen verbundene Gehäuse so zwangsgeführt wird, dass dabei mehrere Referenzmarken überstrichen werden und beim Erreichen des Anschlages des Messsensors im Gehäuse die absolute Position des Führungswagens auf der Führungsschiene rechnerisch ermittelt werden kann. Aber auch die Alternative, bei der das mit dem Messsensor bestückte Gehäuse beim Einsetzen so zwangsverschoben wird, dass dabei mehrere Referenzmarken überstrichen werden, wird als vorteilhaft angesehen.

Gegenstand der Erfindung ist ausserdem ein entsprechendes Verfahren.

Weitere vorteilhafte Einzelheiten der Erfindung sind in den abhängigen Ansprüchen dargelegt.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weiterhin ist die Vorrichtung nicht auf eine Verwendung gemäss dem beanspruchten Verfahren beschränkt. Sowohl die Vorrichtung als auch das Verfahren lassen sich für andere Anwendungen einsetzen.

In der vorliegenden Beschreibung der Erfindung wird der Führungswagen als beweglich gegenüber der Führungsschiene angenommen, die dadurch als fest betrachtet wird. Es wird aber darauf hingewiesen, dass die Begriffe fest und beweglich nur zwischen Führungsschiene und Führungswagen anzusehen sind. Die technischen Lösungen werden nicht verändert, wenn der Führungswagen gegenüber weiteren Teilen fest, die Führungsschiene aber beweglich ist.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Vorrichtung und ein dazugehöriger Verfahrensablauf zur vorliegenden Erfindung erläutert wird.

In den Zeichnungen zeigen:
- Fig. 1: eine perspektivische Darstellung eines Linearführungssystems gemäss einer ersten Ausführungsform der vorliegenden Erfindung, bei der der Lesekopf relativ zum Gehäuse und zum Führungswagen bewegt wird;
- Fig. 2: eine perspektivische Darstellung eines Linearführungssystems gemäss einer zweiten Ausführungsform der vorliegenden Erfindung, bei der das Gehäuse mit dem Lesekopf relativ zum Führungswagen bewegt wird;

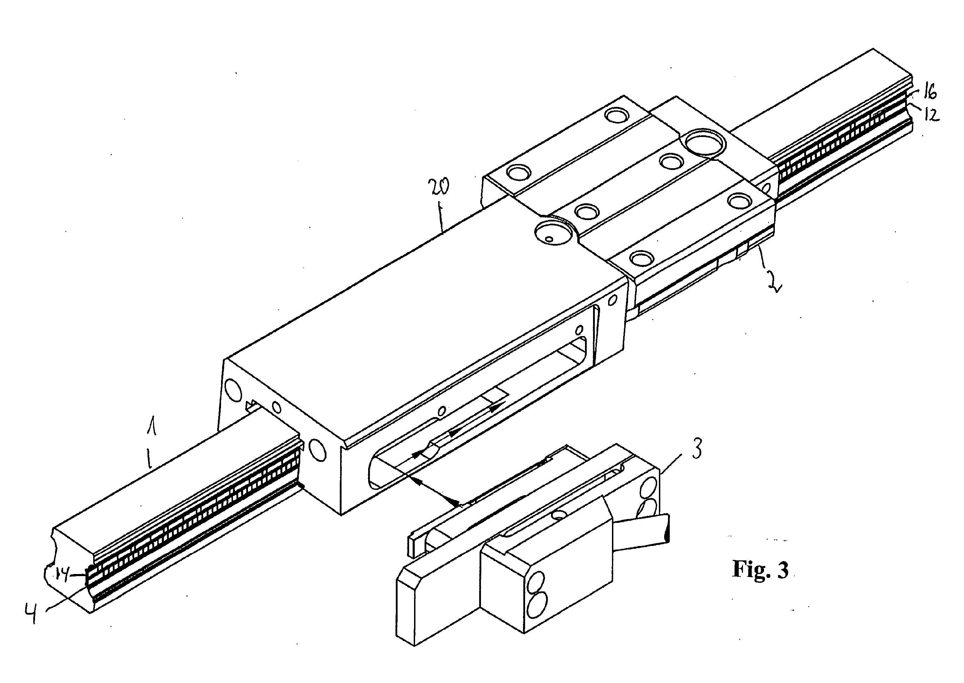

- Fig. 3: eine perspektivische Darstellung eines Linearführungssystems gemäss der ersten Ausführungsform der vorliegenden Erfindung, mit einem herausgenommenen Lesekopf.

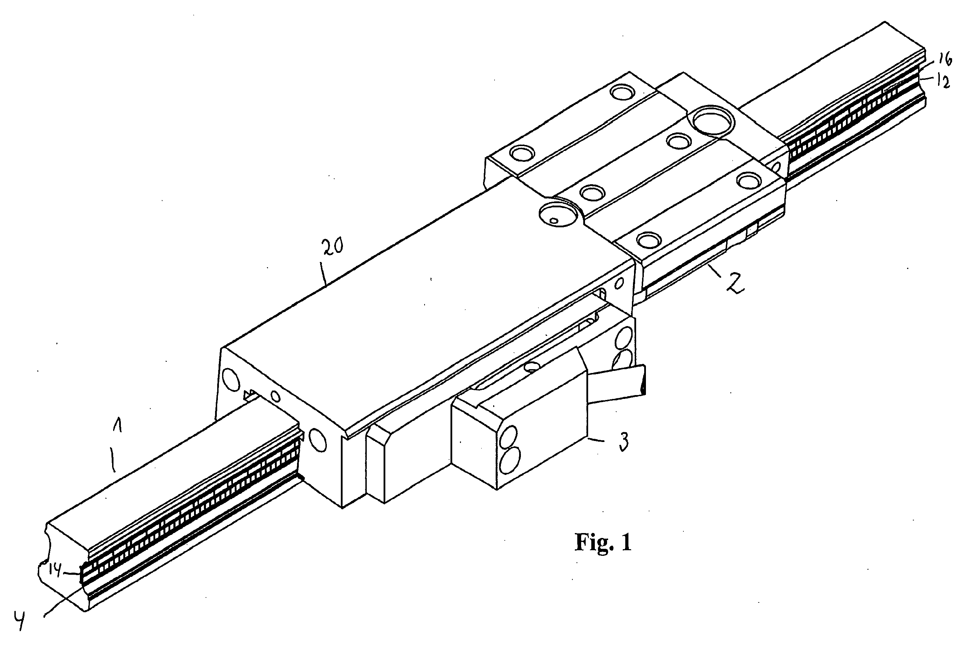

In Figur 1 ist ein Linearführungssystem als Ausführungsbeispiel der vorliegenden Erfindung dargestellt, welches aus dem auf der Führungsschiene 1 angeordneten Führungswagen 2 und einem Messsensor 3 besteht.

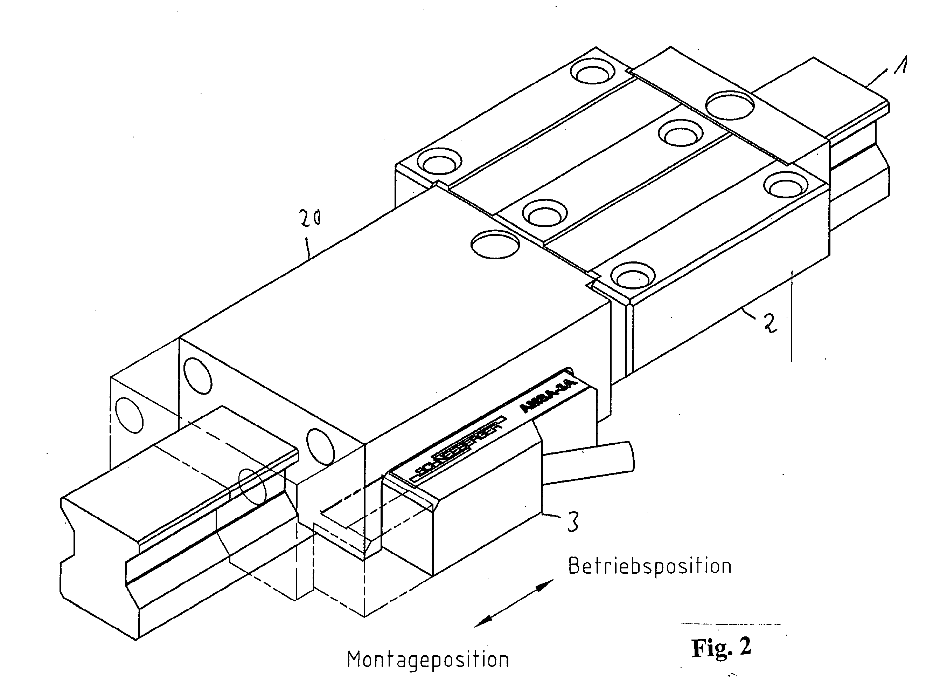

Die Führungsschiene 1, die - wie in Figur 2 dargestellt - aus mehreren hintereinander angeordneten und üblicherweise auf einem hier nicht dargestellten Montageelement fest montierten Schienenelementen besteht, ist mit einem Massstab 10 versehen. Dieser Massstab 10 besteht in den vorliegenden Ausführungsbeispielen aus einer Inkrementalspur 12 und einer Referenzspur 14. Die Referenzspur 14 ist aus kodierten Referenzmarken 16 ausgebildet, die auf der seitlichen Fläche der Führungsschiene 1 angebracht sind.

In einem ersten Ausführungsbeispiel ist der Messsensor 3 in einem Sensorgehäuse 20 untergebracht, das am Führungswagen 2 fest montiert ist. Beim Einbau wird der Messsensor 3 relativ zum Sensorgehäuse 20 und damit auch zum Führungswagen parallel zur Führungsschiene 1 bewegt und legt einen bestimmten Weg entlang des Massstabes zurück. Der Messsensor 3 wird dann am Sensorgehäuse 20 fixiert, z.B. durch Verschrauben. Dieser Weg ist in den hier beschriebenen Ausführungsbeispielen so bemessen, dass einige (z.B. drei) kodierte Referenzmarken 16 zwangsweise überstrichen werden. Wenn nun der Messsensor 3 an einem vorgesehenen Anschlag im Sensorgehäuse 20 anschlägt, liegen im Falle des hier beschriebenen Ausführungsbeispiels drei Auslesungen von Referenzmarken 16 vor und die Position des Führungswagens 2 auf der Führungsschiene 1 ist eindeutig bestimmt. In diesem Ausführungsbeispiel ist der Lesekopf in einem Aluminiumgehäuse eingebaut, das seinerseits fest mit dem Führungswagen verschraubt ist. Das Gehäuse umschließt die Führungsschiene U-förmig und trägt die Dichtungselemente. Eine flexible Verbindung zwischen Lesekopf und Gehäuse oder Gehäuse und Führungswagen ist nicht vorgesehen. In diesem Ausführungsbeispiel ist das Gehäuse als Anbaugehäuse ausgebildet, welches dann alle Anbauteile und den Lesekopf für den Messsensor umfasst.

Der Lesekopf selbst besteht aus einem federbelasteten Keramikgleiter, in dem sich der MR-Sensor und ein Teil der Auswerteelektronik befindet. Die berührende Arbeitsweise erlaubt eine gegen Verschmutzung unempfindliche Funktion des Elements, dadurch dass Späne o.ä. durch den Gleiter zur Seite geschoben werden.

Das Magnetband wird auf der fertiggeschliffenen Führungsschiene aufgeklebt und überschliffen. Danach erfolgt die Magnetisierung der Führungsschiene mit dem eingeklebten Magnetband. Dazu wird ein Magnetisierkopf an der Führungsschiene entlang bewegt. Die Ausrichtung der entstehenden magnetischen Nord- und Südpole wird durch eine lasergestützte Längenmesseinrichtung kontrolliert. Die Abstände zwischen den Nord- und Südpolen der Magnetisierung beträgt typischerweise 200 µm. Es werden zwei parallel angeordnete Magnetspuren aufgebracht. Die Inkrementalspur ist dadurch gekennzeichnet, dass hier in den oben genannten Abständen die Magnetpole aufgebracht sind. Eine zweite Spur ist die Referenzspur, auf der nach einer bestimmten Codierung die Referenzmarken, ebenfalls ausgebildet als Nord- und Südpole, aufgebracht sind. Nach dem Aufbringen der Magnetspuren wird das Magnetband durch ein Abdeckband gegen äußere Einflüsse geschützt. Das Abdeckband wird dabei mittels eines Lasers rundum dicht verschweißt.

In einem alternativen Ausführungsbeispiel nach Figur 2 sind die Verhältnisse von Massstab mit Inkrementalspur und einer Referenzmarken aufweisenden Referenzspur entsprechend wie im vorstehend beschriebenen ersten Ausführungsbeispiel. Der Unterschied zwischen diesen beiden Ausführungsbeispielen liegt darin, dass im zweiten Ausführungsbeispiel der Messsensor 3 fest im Sensorgehäuse 20 eingebaut ist, während sich das Gehäuse 20 - dann mit eingebautem Messsensor 3 - relativ zum Führungswagen bewegt, womit die oben beschriebene Referenzmessung mit dem Auslesen von zwei oder drei Referenzmarken 16 ausgeführt wird und wiederum die ausreichende Information für eine Positionsbestimmung des Führungswagens nach dem Erreichen eines Anschlages - hier des Gehäuses - vorliegt.

In den vorstehend beschriebenen Ausführungsbeispielen sind die kodierten Referenzmarken als auslesbare magnetische Information ausgebildet und der Messsensor liest zumindest die Daten der kodierten Referenzmarken magnetisch aus. Es sollte aber betont werden, dass alternativ auch vorgesehen werden kann und auch vorgesehen ist, dass die Referenzmarken sichtbare oder unsichtbare optische Marken umfassen können und dann ein Auslesevorgang im optischen Bereich, im UV-Bereich oder im Infrarotbereich oder ähnlich ausgeführt wird.

In den vorstehend beschriebenen Ausführungsbeispielen umfasst der Lesekopf eine Stromversorgungspufferung, die so ausgebildet ist, dass beim Einbau ohne externe Energieversorgung die Position erkannt und im Lesekopf gespeichert werden kann, bis die externe Energieversorgung durch die Maschinensteuerung wieder aktiv ist.

## Patentansprüche

1. Linearführungssystem mit
- zumindest einer im wesentlichen gradlinigen Führungsschiene (1),
- zumindest einem auf der Führungsschiene (1) linear beweglich angeordneten Führungswagen (2),
- einer Einrichtung (3) zum Messen des von dem Führungswagen (2) gegenüber der Führungsschiene (1) zurückgelegten Weges, wobei in oder auf der Führungsschiene (1) ein Massstab (10) und im oder auf dem Führungswagen (2) zumindest einen Sensor (3) für eine Abtastung des Massstabes (10) ausgebildet ist,
- wobei der Massstab (10) an einer seitlichen Fläche (14) der Führungsschiene (1) angeordnet ist,
- der Messsensor (3) so an dem Wagen angebaut ist, dass er den Massstab (10) abtasten kann,
- auf der Führungsschiene (1) weiterhin Referenzmarken zur absoluten Bestimmung der Position ausgebildet sind,
**dadurch gekennzeichnet, dass**
- der Messsensor (3) so ausgebildet ist, dass er bei einer Bewegung des Führungswagens (2) auf der Führungsschiene (1) sowohl die Informationen des Massstabes (10) wie auch die Informationen der Referenzmarken erfassen kann,
- der Messsensor (3) so am Führungswagen (2) montiert ist, dass er beim Montieren eine ausreichende Zahl von Referenzmarken (16) überstreicht, um die absolute Position des Messsensors (3) und damit des Führungswagens (2) nach der Montage ermitteln zu können.

2. Linearführungssystem nach Anspruch 1, **dadurch gekennzeichnet, dass** der Lesekopf eine Stromversorgungspufferung umfasst, die so ausgebildet ist, dass beim Einbau ohne externe Energieversorgung die Position erkannt werden und im Lesekopf gespeichert werden kann.

3. Linearführungssystem nach Anspruch 1 oder 2, **dadurch gekennzeichnet, dass** der Messsensor (3) in einem am Führungswagen (2) montierten Gehäuse (20) angeordnet ist.

4. Linearführungssystem nach Anspruch 3, **dadurch gekennzeichnet, dass** der Messsensor (3) bei der Montage relativ zum Gehäuse (20) und dem Führungswagen (2) bewegt wird.

5. Linearführungssystem nach Anspruch 3, **dadurch gekennzeichnet, dass** das Gehäuse (20) mit dem Messsensor (3) bei der Montage relativ zum Führungswagen (2) bewegt wird.

6. Linearführungssystem nach einem der vorstehenden Ansprüche, **dadurch gekennzeichnet, dass** der Messsensor (3) als ein magnetischer Sensor ausgebildet ist.

7. Linearführungssystem nach einem der vorstehenden Ansprüche, **dadurch gekennzeichnet, dass** die Referenzmarken (16) abstandscodierte Referenzmarken umfassen.

8. Verfahren zur Inbetriebnahme eines Führungswagens (2) auf einer Führungsschiene (1) eines Linearbewegungssystems, insbesondere eines Linearbewegungssystems nach einem der Ansprüche 1 bis 7, mit einer Einrichtung zum Messen des von dem Führungswagen (2) gegenüber der Führungsschiene (1) zurückgelegten Weges, wobei auf oder in der Führungsschiene (1) ein Massstab (10) und im oder am Führungswagen (2) zumindest einen Messsensor (3) für eine Abtastung des Massstabes (10) vorgesehen ist, der Messsensor (3) so an oder in dem Wagen an- oder eingebaut ist, dass er den Massstab (10) abtasten kann, und auf der Führungsschiene (1) weiterhin Referenzmarken zur absoluten Bestimmung der Position ausgebildet sind,
**dadurch gekennzeichnet, dass**
- der Messsensor (3) bei einer Bewegung des Führungswagens (2) auf der Führungsschiene (1) sowohl die Informationen des Massstabes (10) wie auch die Informationen der Referenzmarken erfasst,
- der Messsensor (3) so am Führungswagen (2) montiert wird, dass er beim Montieren eine ausreichende Zahl von Referenzmarken (16) überstreicht, um die absolute Position des Messsensors (3) und damit des Führungswagens (2) nach der Montage ermitteln zu können.

9. Verfahren nach Anspruch 8, **dadurch gekennzeichnet, dass** der Messsensor (3) in einem am Führungswagen (2) montierten Gehäuse (20) angeordnet ist und bei der Montage relativ zum Gehäuse (20) und dem Führungswagen (2) bewegt wird.

10. Verfahren nach Anspruch 8, **dadurch gekennzeichnet, dass** der Messsensor (3) in einem am Führungswagen (2) montierten Gehäuse (20) angeordnet ist und das Gehäuse mit dem Messsensor (3) bei der Montage relativ zum Führungswagen (2) bewegt wird.

11. Verfahren nach einem der vorstehenden Ansprüche 8 bis 10, **dadurch gekennzeichnet, dass** der Messvorgang als ein magnetischer Lesevorgang durchgeführt wird und dass als Referenzmarken (16) abstandscodierte Referenzmarken magnetisch gelesen werden.
